# EUROPÄISCHE PATENTANMELDUNG

(11) **EP 1 925 831 A2**
(43) Veröffentlichungstag der Anmeldung: **28.05.2008**
(21) Anmeldenummer: 07020530.7
(22) Anmeldetag: 19.10.2007
(51) Int. Cl.: F16C 11/06, F16B 21/07, F16B 21/08, F16B 37/04

(54) **Schwingungsentkoppelndes Kupplungselement**

(30) Priorität: 22.11.2006 DE 202006017798 U
(71) Anmelder: Böllhoff Verbindungstechnik GmbH, 33649 Bielefeld (DE)
(72) Erfinder: Süssenbach, Rainer, 33803 Steinhagen (DE); Bertram, Andreas, 32107 Bad Salzuflen (DE)
(74) Vertreter: Hauck Patent- und Rechtsanwälte

(57) **Zusammenfassung**

Beschrieben wird ein schwingungsentkoppelndes Kupplungselement aus einem elastisch verformbaren Aufnahmeteil und einem Einsteckteil. Das Aufnahmeteil (4) weist einen Befestigungsbereich (8), einen Entkopplungsbereich (10) und einen Aufnahmebereich (12) auf. Der Entkopplungsbereich (10) besteht aus einem am Befestigungsbereich angeformten, in Richtung weg vom Befestigungsbereich sich erweiternden Wandabschnitt (14), einem am Aufnahmebereich angeformten hülsenförmigen Wandabschnitt (18) und einem diese beiden Wandabschnitte (14, 18) verbindenden ringschulterförmigen Wandabschnitt (16). Das Einsteckteil (6) weist einen Befestigungsbereich (26) und einen Einsteckbereich (28) auf. Der Einsteckbereich (28) ist an den Aufnahmebereich (12) des Aufnahmeteils angepasst, um im zusammengebauten Zustand des Kupplungselementes eine Steckverbindung zu bilden.

## Beschreibung

Die Erfindung betrifft ein schwingungsentkoppelndes Kupplungselement, das zum Verbinden zweier Bauteile verwendet wird.

Im Stand der Technik sind zahlreiche Kupplungen, insbesondere Steckkupplungen, zum lösbaren Verbinden zweier Bauteile bekannt. So zeigt beispielsweise das deutsche Gebrauchsmuster 202 16 836 eine Steckkupplung aus einem elastisch verformbaren pfannenartigen Kupplungsteil und einem kugelartigen Kupplungsteil, die an den beiden zu verbindenden Bauteilen befestigbar und ineinandersteckbar sind. Das pfannenartige Kupplungsteil besteht aus einer Kugelpfanne, einer an dieser angeformten ringförmigen Zwischenwand sowie einer an dieser angeformten rohrförmigen Außenwand, die die Kugelpfanne mit Abstand umgibt und die in einem Längsschnitt ein wellenförmiges Profil hat. Das wellenförmige Profil der ringförmigen Zwischenwand sorgt für eine entsprechende Nachgiebigkeit des pfannenartigen Kupplungsteils sowohl in radialer wie auch in axialer Richtung, so dass das pfannenförmige Kupplungsteil schwingungsentkoppelnde Ausgleichsbewegungen zwischen den beiden Bauteilen in allen Richtungen ausführen kann.

Diese Steckkupplung hat sich in der Praxis bestens bewährt. Für bestimmte Anwendungszwecke wäre allerdings eine konstruktiv einfachere Lösung einer derartigen Kupplung wünschenswert. Auch wäre es von Vorteil, wenn die Eigenfrequenz des Schwingungssystems derartiger Steckkupplungen wie auch der Toleranzausgleich hinsichtlich Kraft und Weg solcher Steckkupplungen besser kontrolliert werden könnten.

Der vorliegenden Erfindung liegt die Aufgabe zugrunde, ein schwingungsentkoppelndes Kupplungselement zu schaffen, das konstruktiv besonders einfach ist und für sich allein wie auch in Verbindung mit herkömmlichen Steckkupplungen verwendet werden kann.

Diese Aufgabe wird erfindungsgemäß durch das in Anspruch 1 definierte schwingungsentkoppelnde Kupplungselement gelöst.

Das erfindungsgemäß ausgebildete Kupplungselement besteht aus einem elastisch verformbaren Aufnahmeteil und einem Einsteckteil, die längs einer zentralen Achse ineinandersteckbar sind. Das Aufnahmeteil weist einen Befestigungsbereich, einen Entkopplungsbereich und einen Aufnahmebereich auf. Der Entkopplungsbereich besteht aus einem an dem Befestigungsbereich angeformten, in Richtung weg vom Befestigungsbereich sich erweiternden Wandabschnitt, einem an dem Aufnahmebereich angeformten hülsenförmigen Wandabschnitt und einem diese beiden Wandabschnitte miteinander verbindenden ringschulterförmigen Wandabschnitt. Das Einsteckteil besteht aus einem Befestigungsbereich und einem Einsteckbereich, von denen der Einsteckbereich an den Aufnahmebereich des Aufnahmeteils angepasst ist, um im zusammengebauten Zustand des Kupplungselementes eine Steckverbindung zu bilden.

Der Entkopplungsbereich des Aufnahmeteils ist sowohl in axialer wie auch in radialer Richtung elastisch verformbar. Er hat somit schwingungsentkoppelnde Eigenschaften in beliebigen Richtungen. Trotz eines geringen konstruktiven Aufwandes zeichnet sich daher das Kupplungselement durch schwingungs- und geräuschdämpfende Eigenschaften aus.

In weiterer Ausgestaltung der Erfindung ist vorgesehen, dass die Befestigungsbereiche des Aufnahmeteils und des Einsteckteils unmittelbar an zwei miteinander zu verbindenden festen Bauteilen befestigbar sind, so dass das Kupplungselement ohne weitere Kupplungsteile als Kupplung zwischen den beiden Bauteilen dient. In diesem Fall bildet somit das erfindungsgemäß ausgebildete Kupplungselement eine besonders kostengünstige Lösung einer Steckkupplung zum Verbinden zweier fester Bauteile.

Alternativ hierzu bietet die Erfindung die Möglichkeit, dass das Kupplungselement als bolzenförmiges Kupplungsteil einer Steckkupplung ausgebildet ist, das in ein pfannenartiges Kupplungsteil der Steckkupplung einsteckbar ist.

In diesem Fall kann somit das erfindungsgemäß ausgebildete Kupplungselement in Verbindung mit einer herkömmlichen Steckkupplung verwendet werden. In Frage kommt beispielsweise eine Steckkupplung, wie sie in dem eingangs erwähnten deutschen Gebrauchsmuster 202 16 836 offenbart ist. Grundsätzlich kommen jedoch alle Steckkupplungen in Frage, bei denen ein bolzenförmiges Kupplungsteil in ein pfannenartiges Kupplungsteils eingesteckt wird, siehe beispielsweise DE 198 36 108, DE 299 20 379, DE 201 07 949, DE 201 08 408 u. a.

Wenn das erfindungsgemäß ausgebildete Kupplungselement in Verbindung mit einer herkömmlichen Steckkupplung verwendet wird, besitzt das Gesamtsystem zwei getrennte schwingungsentkoppelnde Bereiche. Dies bietet die Möglichkeit, die Eigenfrequenz des Gesamtsystems zur Vermeidung unerwünschter Schwingungen zu beeinflussen und einen vergrößerten Toleranzausgleich hinsichtlich Kraft und Weg des Gesamtsystems zu erzielen.

Das Aufnahmeteil und Einsteckteil des Kupplungselementes bestehen vorzugsweise aus Kunststoff, wie noch genauer erläutert wird.

Weitere vorteilhafte Ausgestaltungen der Erfindung sind in den abhängigen Ansprüchen definiert.

Anhand der Zeichnungen werden Ausführungsbeispiele der Erfindung näher erläutert. Es zeigt:
Fig. 1 einen Längsschnitt durch ein erfindungsgemäß ausgebildetes Kupplungselement;
Fig. 2 eine perspektivische Ansicht des Kupplungselementes in Fig. 1;
Fig. 3 einen Längsschnitt durch das Aufnahmeteil des Kupplungselementes in den Figuren 1, 2;
Fig. 4 eine Draufsicht auf das Aufnahmeteil der Fig. 3 von unten;
Fig. 5 eine Seitenansicht des Einsteckteils des Kupplungselementes in den Figuren 1, 2;
Fig. 6 einen Längsschnitt durch eine Steckkupplung, bei der das Kupplungselement der Figuren 1, 2 als bolzenartiges Kupplungsteil dient, das in einem pfannenartigen Kupplungsteil der Steckkupplung sitzt;
Figuren 7 bis 9 unterschiedliche Ausführungsformen des Aufnahmeteils des Kupplungselementes;
Figuren 10 bis 12 unterschiedliche Ausführungsformen des Einsteckteils des Kupplungselementes.

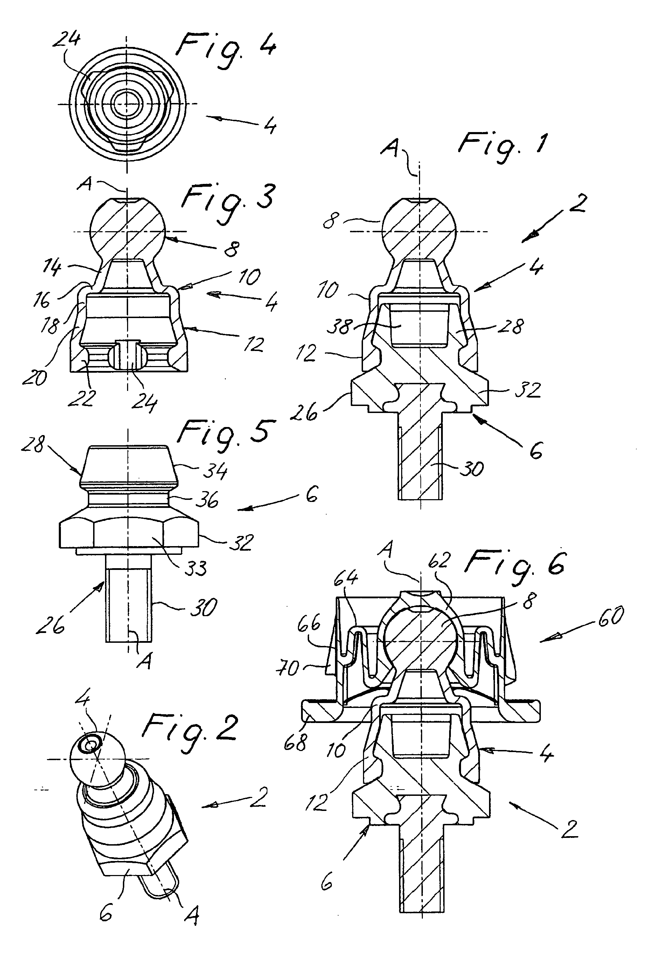

Das in den Figuren 1 und 2 dargestellte schwingungsentkoppelnde Kupplungselement 2 besteht aus einem Aufnahmeteil 4 und einem Einsteckteil 6, die längs einer zentralen Achse A ineinandersteckbar sind.

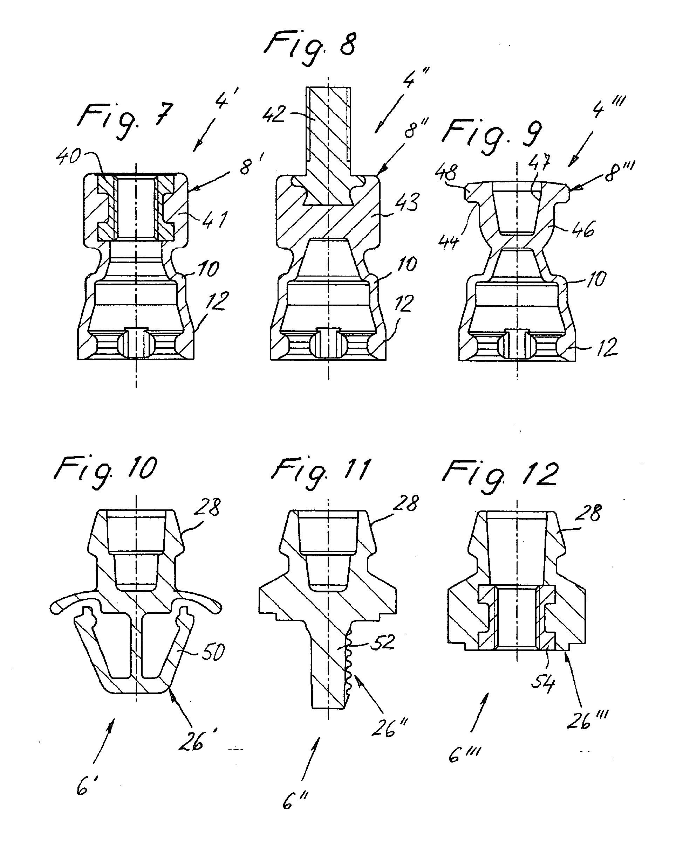

Die Figuren 3 und 4 zeigen das Aufnahmeteil 4. Es setzt sich aus einem Befestigungsbereich 8, einem Entkopplungsbereich 10 und einem Aufnahmebereich 12 zusammen. Der Befestigungsbereich 8 besteht im dargestellten Ausführungsbeispiel aus einer Kugel, die in eine Kugelpfanne einer Steckkupplung (Fig. 6) einsteckbar ist. Der Befestigungsbereich kann jedoch auch so ausgebildet sein, dass das Aufnahmeteil 4 unmittelbar an einem zu verbindenden Bauteil (nicht gezeigt) befestigt werden kann. Möglichkeiten hierfür zeigen die Figuren 7 bis 9, auf die noch genauer eingegangen wird.

Der Entkopplungsbereich 10 des Aufnahmeteils 4 besteht aus einem sich in Richtung weg von dem Befestigungsbereich 8 erweiternden Wandabschnitt 14, einem hülsenförmigen Wandabschnitt 18 und einem ringschulterförmigen Wandabschnitt 16, der die beiden Wandabschnitte 14 und 18 miteinander verbindet. Der Wandabschnitt 14 ist an der Kugel des Befestigungsbereiches 8 unmittelbar angeformt und hat im dargestellten Ausführungsbeispiel eine konische Form. Der Wandabschnitt 18 ist unmittelbar an dem Aufnahmebereich 12 angeformt und hat im dargestellten Ausführungsbeispiel eine zylindrische Form. Der ringschulterförmige Wandabschnitt 16 verläuft im Wesentlichen rechtwinklig zu der zentralen Achse A und ist durch Radien mit den Wandabschnitten 14 und 18 verbunden.

Der Aufnahmebereich 12 des Aufnahmeteils 4 besteht aus einem sich vom Wandabschnitt 18 aus konisch erweiternden Wandabschnitt 20, der an seinem freien Ende in einen zylindrischen Wandabschnitt mit einem radial einwärts vorstehenden ringförmigen Vorsprung 22 übergeht. Der ringförmige Vorsprung 22 ist an mehreren (z. B. drei) über den Umfang verteilten Stellen mit Ausnehmungen 24 versehen, so dass der Aufnahmebereich 12 an diesen Stellen eine entsprechend verringerte Wandstärke hat, um dem Aufnahmebereich 12 eine gewünschte Elastizität zu verleihen.

Der konische Wandabschnitt 14 des Entkopplungsbereiches 10 hat eine Wandstärke, die von dem ringschulterförmigen Wandabschnitt 16 in Richtung auf den Befestigungsbereich 8 kleiner wird. Hierdurch lässt sich bei der noch zu beschreibenden Funktionsweise des Kupplungselementes eine gleichmäßige Spannungsverteilung über der axialen Länge des Wandabschnittes 14 erzielen. Die Wandabschnitte 16, 18 und 20 haben jeweils eine gleichmäßige Wandstärke.

Zur Beschreibung des Einsteckteils 6 wird zusätzlich zu Fig. 1 auf Fig. 5 verwiesen. Das Einsteckteil 6 besteht aus einem Befestigungsbereich 26 und einem Einsteckbereich 28. Der Befestigungsbereich 26 hat im dargestellten Ausführungsbeispiel einen Gewindeabschnitt 30 in Form eines metallischen Gewindebolzens, der an seinem einen Ende in einen Körperabschnitt 32 des Einsteckteils 6 eingebettet ist. Der Körperabschnitt 32 ist mit einem Antriebsmerkmal 33 versehen, das im dargestellten Ausführungsbeispiel ein Sechskant ist, jedoch auch in beliebig anderer Weise ausgestaltet werden kann.

Der Befestigungsbereich 6 wird an einem der zu verbindenden Bauteile (nicht gezeigt) dadurch befestigt, dass der metallische Gewindeabschnitt 30 in eine entsprechende Gewindebohrung des Bauteils eingeschraubt wird. Es sei jedoch darauf hingewiesen, dass der Befestigungsbereich in beliebig anderer Weise ausgebildet werden kann, sofern er nur eine Befestigung des Einsteckteils 6 an dem zugehörigen Bauteil erlaubt. Verschiedene Möglichkeiten für derartige Befestigungsarten zeigen die Figuren 10 bis 12, auf die noch genauer eingegangen wird.

Der Einsteckbereich 28 des Einsteckteils 6 ist unmittelbar an dem Körperabschnitt 32 des Befestigungsbereiches 26 angeformt und besteht seinerseits aus einem Körperabschnitt, der eine konische Außenfläche 34 hat, wobei zwischen der konischen Außenfläche 34 und dem Körperabschnitt 32 eine Ringnut 36 vorgesehen ist. Die konische Außenfläche 34 und die Ringnut 36 des Einsteckteils 6 sind hinsichtlich ihrer Form und Abmessungen an den Aufnahmebereich 12, d.h. an den konischen Wandabschnitt 20 und den ringförmigen Vorsprung 22 des Aufnahmeteils 4, so angepasst, dass sie in ihrer Geometrie im Wesentlichen übereinstimmen, wobei jedoch die Durchmesser der konischen Außenfläche 34 und der Ringnut 36 etwas größer sind als die Innendurchmesser des konischen Wandabschnittes 20 und des ringförmigen Vorsprunges 22 des Aufnahmebereiches 12 des Aufnahmeteils 4.

Im zusammengebauten Zustand des Kupplungselementes 2 (Fig. 1) bilden somit der Einsteckbereich 28 des Einsteckteils 6 und der Aufnahmebereich 12 des Aufnahmeteils 4 eine Steckverbindung, bei der der konische Wandabschnitt 20 des Aufnahmeteils 4 und die konische Außenfläche 34 des Einsteckteils 6 presssitzartig aneinander anliegen und der ringförmige Vorsprung 22 des Aufnahmeteils 4 spielfrei in der Ringnut 36 des Einsteckteils 6 sitzt.

Wie aus Fig. 1 hervorgeht, ist der Einsteckbereich 28 des Einsteckteils 6 mit einer zentralen Ausnehmung 38 versehen, die der Materialersparnis dient.

Wie bereits erwähnt, zeigen die Figuren 7 bis 9 unterschiedliche Ausführungsformen des Befestigungsbereiches des Aufnahmeteils.

Bei der in Fig. 7 gezeigten Ausführungsform ist der Befestigungsbereich 8' des Aufnahmeteils 4' mit einem Gewindeabschnitt 40 in Form einer Gewindebuchse versehen, die aus einem metallischen Werkstoff oder auch einem faserverstärkten Kunststoff besteht. Die Gewindebuchse ist axial unverschiebbar und drehfest in einem Körperabschnitt 41 des Aufnahmeteils 8' angeordnet und wird vorzugsweise im Spritzgießverfahren mit dem Material des Körperabschnittes 41 umspritzt. Die Gewindebuchse dient zum Herstellen einer Schraubverbindung mit einem der zu verbindenden Bauteile (nicht gezeigt).

Bei der Ausführungsform der Fig. 8 umfasst der Befestigungsbereich 8" des Einsteckteils 4" einen Gewindeabschnitt 42 in Form eines Gewindebolzens, der ebenfalls aus einem metallischen Material oder einem faserverstärktem Kunststoff bestehen kann und in einem Spritzgießverfahren in das Material eines Körperabschnittes 43 des Aufnahmeteils 4" eingebettet wird. Der Gewindeabschnitt 42 dient wiederum zum Herstellen einer Gewindeverbindung mit einem der zu verbindenden Bauteile.

Bei der Ausführungsform der Fig. 9 ist der Befestigungsbereich 8''' des Aufnahmeteils 4''' mit einem profilierten Abschnitt 44 versehen, der einen an einem Körperabschnitt 46 angeformten ringförmigen Vorsprung 48 aufweist. Der ringförmige Vorsprung 48 kann in eine T-Nut artige Führung des zugehörigen Bauteils (nicht gezeigt) eingeführt werden, wodurch eine gewindefreie Formschlussverbindung zwischen dem Aufnahmeteil 4''' und dem zugehörigen Bauteil entsteht. Hierbei kann eine zentrale Ausnehmung 47 des Aufnahmebereiches 8''' als Rastvertiefung dienen, in die eine Rastkugel (nicht gezeigt) des zugehörigen Bauteils einrastet, um das Aufnahmeteil 4''' an einer vorgegebenen Stelle des zugehörigen Bauteils zu fixieren.

Es sind, wie bereits erwähnt, zahlreiche weitere Befestigungsarten möglich, die nicht im Einzelnen dargestellt sind.

Die Figuren 10 bis 12 zeigen verschiedene Möglichkeiten zum Befestigen des Einsteckteils an dem zugehörigen Bauteil.

So ist bei der Ausführungsform der Figur 10 das Einsteckteil 6' mit einem Befestigungsbereich 26' in Form eines doppelarmigen Federgliedes 50 versehen, das mit dem zugehörigen (plattenförmigen) Bauteil eine Federclipsverbindung eingeht.

Bei der Ausführungsform der Fig. 11 besteht der Befestigungsbereich 26" des Einsteckteils 6" aus einem Gewindeabschnitt 52 in Form eines Gewindebolzens, der an dem übrigen Einsteckteil 6" einstückig angeformt ist. Wie auf der rechten Seite des Gewindeabschnittes 52 angedeutet, ist der Gewindebolzen mit einem gewindefurchenden Kunststoffgewinde versehen, wie es beispielsweise in DE 10 2004 021 484 beschrieben ist. Es sind jedoch beliebig andere Gewindearten und -formen möglich.

Bei der Ausführungsform der Fig. 12 ist der Befestigungsbereich 26 ''' des Einsteckteils 6''' mit einem Gewindeabschnitt 54 in Form einer Gewindebuchse versehen, die der Gewindebuchse 40 in Fig. 7 entspricht. An dieser Stelle ist darauf hinzuweisen, dass die in den Figuren 7 bis 9 dargestellten Befestigungsarten auch in Verbindung mit dem Einsteckteil verwendet werden können, wie auch die in den Figuren 10 bis 12 dargestellten Befestigungsarten in Verbindung mit dem Aufnahmeteil verwendet werden können.

Das Kupplungselement wird, abgesehen von gegebenenfalls vorgesehenen metallischen Einsätzen in den Befestigungsbereichen, aus Kunststoff hergestellt. Hierbei besteht das Aufnahmeteil zum Zwecke seiner Entkopplungsfunktion aus einem Kunststoff sehr hoher elastischer Verformbarkeit und Dehnung, während das Einsteckteil aus einem harten und im Wesentlichen unverformbaren Kunststoff hergestellt ist. Grundsätzlich könnte das Einsteckteil auch aus einem anderen harten Werkstoff, insbesondere einem metallischen Werkstoff, bestehen.

Vorzugsweise besteht das Aufnahmeteil aus einem thermoplastischem Elastomer auf Polyesterbasis, insbesondere Polybutylenterephthalat (PBT) oder Polyethylenterephthalat (PET). Diese Materialien sind trotz relativ hoher Shore-Härte elastisch verformbar und haben eine ausgezeichnete Wärmeformbeständigkeit (150° C und mehr). Darüber hinaus verfügen sie über eine gute Chemikalienbeständigkeit. In Frage kommen jedoch aus vernetzte Elastomere und Gummi/Kautschuk. Bei den Ausführungsformen der Figuren 7 und 8 sind die Gewindeabschnitte 40 und 42 mit diesem Material umspritzt.

Das Einsteckteil der Figuren 1, 5 und 12 besteht aus einem Kunststoff der Gruppe der technischen Thermoplaste, der durch Fasern, insbesondere Glasfasern, verstärkt ist, um dem Einsteckteil die erforderliche hohe Festigkeit und Härte zu verleihen. Die Gewindeabschnitte 30 und 54 können ebenfalls aus Kunststoff bestehen, wenn die geforderte mechanische Festigkeit dies zulässt. Bei höheren Festigkeitsanforderungen werden jedoch die Gewindeabschnitte 30 und 54 aus einem metallischen Werkstoff hergestellt, der im Spritzgießverfahren mit dem Kunststoff des übrigen Einsteckteils umspritzt wird.

Bei der Ausführungsform der Fig. 10 wird das Einsteckteil 6' aus einem schlagzähen Kunststoff gefertigt, der die Clipsfunktion des Federgliedes 50 ermöglicht. Der Kunststoff kann auch hier zur Erhöhung seiner Festigkeit mit einem Füllstoff, insbesondere mit Glasfasern, verstärkt werden.

Bei der Ausführungsform der Fig. 11, bei der der Befestigungsbereich 26" mit einem gewindefurchenden bzw. -formenden Gewinde gemäß DE 10 2004 021 484 versehen ist, wird das Einsteckteil 6" zweckmäßigerweise aus einem Hochleistungskunststoff hergestellt, dessen Temperaturbeständigkeit, Steifigkeit und Festigkeit wesentlich größer als die des Kunststoffes des zugehörigen Bauteils (nicht gezeigt) sind. Vorzugsweise besteht der Hochleistungskunststoff aus Polyphtalamid (PPA-GF) oder Copolyamid auf der Basis von Polyphthalamid-GF oder Polyetherimid-GF (PEI-GF) oder Polyetheretherketon-GF (PEEK-GF) oder Polyamid -Hochglasgefüllt oder Polyphthalamid - Carbonfaserverstärkt oder Polyphthalamid - Carbonfaserverstärkt und Glasfaserverstärkt oder Copolyamid auf der Basis von Polyphthalamid - Carbonfaserverstärkt oder Copolyamid auf der Basis von Polyphthalamid - Carbonfaserverstärkt und glasfaserverstärkt oder einem duromeren Kunststoff.

Es wird nun die Funktionsweise des Kupplungselementes beschrieben. Hierzu sei zunächst angenommen, dass das Kupplungselement als Kupplung zwischen zwei zu verbindenden festen Bauteilen (nicht gezeigt) verwendet wird, bei der die Befestigungsbereiche des Aufnahmeteils und Einsteckteils unmittelbar an den zu verbindenden Bauteilen befestigt werden. Hierbei können die in den Figuren 7 bis 12 gezeigten Befestigungsarten zum Einsatz kommen.

Das Kupplungselement 2 ist vorzugsweise als Zusammenbauteil (ZSB) ausgebildet, das vor seiner Montage an den zu verbindenden Bauteilen zusammengesetzt wird, indem das Einsteckteil in das Aufnahmeteil eingesteckt wird. Hierzu wird das Aufnahmeteil 4 mit dem ringförmigen Vorsprung 22 voraus auf den Einsteckbereich 28 des Einsteckteils 6 geschoben, bis der ringförmige Vorsprung 22 in die Ringnut 36 einrastet. Die hierzu erforderliche Dehnung des Aufnahmebereiches 12 des Aufnahmeteils 4 wird einerseits durch die Eigenschaften des Kunststoffes und andererseits durch die Geometrie des Aufnahmebereiches 12 (Ausnehmungen 24 in dem ringförmigen Vorsprung 22) ermöglicht. Das Kupplungselement 2 kann nun als Einheit transportiert und gehandhabt werden, ehe das Aufnahmeteil am einen Bauteil und das Einsteckteil am anderen Bauteil befestigt wird.

Grundsätzlich ist es jedoch auch möglich, zunächst das Aufnahmeteil und Einsteckteil getrennt voneinander an den zugehörigen Bauteilen zu befestigen und erst anschließend das Einsteckteil und das Aufnahmeteil durch eine Relativbewegung zwischen den beiden zu verbindenden Bauteilen ineinander zu stecken. In beiden Fällen sind das Aufnahmeteil und das Einsteckteil im fertig montierten Zustand durch eine spielfreie Steckverbindung zwischen dem Aufnahmebereich 12 und dem Einsteckbereich 28 miteinander verbunden, wie vorstehend bereits im Einzelnen beschrieben wurde.

Im fertig montierten Zustand ermöglicht der Entkopplungsbereich 10 des Aufnahmeteils 4 schwingungsentkoppelnde Ausgleichsbewegungen zwischen den beiden durch das Kupplungselement 2 verbundenen Bauteile. Bei einer axialen Relativbewegung zwischen den beiden Bauteilen und somit zwischen dem Aufnahmeteil 4 und dem Einsteckteil 6 verformt sich der ringförmige Schulterabschnitt 16 des Entkopplungsbereiches 10. Im Falle einer Axialbewegung in Zugrichtung wird der ringschulterförmige Wandabschnitt 16 axial nach außen verformt, und bei einer axialen Relativbewegung in Druckrichtung wird der ringschulterförmige Wandabschnitt 16 axial nach innen verformt.

Bei Relativbewegungen zwischen den beiden Bauteilen und somit zwischen dem Aufnahmeteil 4 und dem Einsteckteil 6 in radialer Richtung kommt es zu einer entsprechenden Verformung sowohl des konischen Wandabschnittes 14 wie auch des ringschulterförmigen Wandabschnittes 16 des Entkopplungsbereiches 10. Der konische Wandabschnitt 14 unterliegt hierbei einer Biegeverformung, während der ringschulterförmige Wandabschnitt 16 entsprechend der Biegerichtung auf gegenüberliegenden Seiten in unterschiedlichen axialen Richtungen verformt wird.

Es versteht sich, dass derartige axiale und radiale Ausgleichsbewegungen sich überlagern können. Der Entkopplungsbereich 10 des Aufnahmeteils 4 ermöglicht somit schwingungsentkoppelnde und -dämpfende Ausgleichsbewegungen zwischen den durch das Kupplungselement verbundenen Bauteilen in beliebigen Richtungen. Der bei den Ausgleichsbewegungen zu überwindende Widerstand wird durch die Eigenschaften des verwendeten Kunststoffes des Aufnahmeteils 4 bestimmt, der eine sehr hohe elastische Verformung und sehr hohe Dehnung bei vergleichsweise großer Shore-Härte aufweist. Durch die Materialeigenschaften des Kunststoffes wird auch die Rückstellkraft zum Rückstellen des Entkopplungsbereiches 10 in seine Ausgangsstellung bestimmt.

Bei den in den Zeichnungen dargestellten Ausführungsbeispielen des Aufnahmeteils ist der Entkopplungsbereich 10 immer gleich ausgebildet. Es versteht sich jedoch, dass der Entkopplungsbereich hinsichtlich seiner Geometrie, Abmessungen und Wandstärke an spezielle Anforderungen hinsichtlich Kraft und Weg der schwingungsentkoppelnden Ausgleichbewegungen angepasst werden kann.

Ein wichtiger Vorteil der vorliegenden Erfindung besteht darin, dass das Kupplungselement 2 nicht nur als Kupplung zwischen zwei zu verbindenden Bauteilen, sondern auch als bolzenförmiges Kupplungsteil einer Steckkupplung verwendet werden kann. Diese Einsatzmöglichkeit ist in Fig. 6 dargestellt, in der das Kupplungselement 2 in Verbindung mit einer schwingungsentkoppelnden Steckkupplung verwendet wird, wie sie in der eingangs erwähnten Gebrauchsmusterschrift DE 202 16 836 offenbart ist.

Somit wirkt das Kupplungselement 2 mit einem pfannenartigen Kupplungsteil 60 zusammen, das aus einer Kugelpfanne 62, einer Zwischenwand 64 mit gewelltem Profil und einer Außenwand 66 besteht. An der Außenwand 66 sind ein Ringflansch 68 und mehrere Vorsprünge 70 angeformt, durch die das pfannenartige Kupplungsteil 60 an einem plattenförmigen Bauteil (nicht gezeigt) befestigt werden kann. Wegen weiterer Einzelheiten des pfannenförmigen Kupplungsteils 6 sei auf die vorstehend erwähnte Gebrauchsmusterschrift verwiesen.

Wenn das pfannenförmigen Kupplungsteil 60 an dem einen Bauteil und das Kupplungselement 2 an dem anderen Bauteil befestigt ist, kann die Steckkupplung durch eine Relativbewegung zwischen den beiden Bauteilen eingerückt werden, wobei die Kugel des Kupplungselementes 2 in die Kugelpfanne 62 des pfannenartigen Kupplungsteils 60 einrastet.

Die beiden Bauteile sind dann durch ein Kupplungssystem verbunden, das über zwei getrennte Entkopplungsbereiche (Zwischenwand 64, Entkopplungsbereich 10) verfügt. Hierdurch lassen sich die Gesamtsteifigkeit und die schwingungsentkoppelnden bzw. -dämpfenden Eigenschaften des Gesamtsystems in gezielter Weise beeinflussen. Insbesondere kann auf diese Weise die Eigenfrequenz des Gesamtsystems so eingestellt werden, dass unerwünschte Resonanzschwingungen vermieden werden. Außerdem ergibt sich ein vergrößerter Toleranzbereich hinsichtlich Kraft und Weg der Ausgleichsbewegungen, was dem Konstrukteur derartiger Kupplungssysteme einen größeren Gestaltungsfreiraum schafft.

## Patentansprüche

1. Schwingungsentkoppelndes Kupplungselement aus einem elastisch verformbaren Aufnahmeteil (4) und einem Einsteckteil (6), die längs einer zentralen Achse (A) ineinandersteckbar sind, wobei
das Aufnahmeteil (4) einen Befestigungsbereich (8), einen Entkopplungsbereich (10) und einen Aufnahmebereich (12) aufweist, von denen der Entkopplungsbereich (10) aus einem am Befestigungsbereich (8) angeformten, in Richtung weg vom Befestigungsbereich sich erweiternden Wandabschnitt (14), einem am Aufnahmebereich (12) angeformten hülsenförmigen Wandabschnitt (18) und einem diese beiden Wandabschnitte (14, 18) verbindenden ringschulterförmigen Wandabschnitt (16) besteht, und
das Einsteckteil (6) einen Befestigungsbereich (26) und einen Einsteckbereich (28) aufweist, von denen der Einsteckbereich (28) an den Aufnahmebereich (12) des Aufnahmeteils (4) angepasst ist, um im zusammengebauten Zustand des Kupplungselementes eine Steckverbindung zu bilden.

2. Kupplungselement nach Anspruch 1, **dadurch gekennzeichnet, dass** der hülsenförmige Wandabschnitt (18) des Entkopplungsbereiches (10) zylindrisch ausgebildet ist.

3. Kupplungselement nach Anspruch 1 oder 2, **dadurch gekennzeichnet, dass** der ringschulterförmige Wandabschnitt (16) des Entkopplungsbereiches (10) rechtwinklig zu der zentralen Achse (A) verläuft.

4. Kupplungselement nach einem der vorhergehenden Ansprüche, **dadurch gekennzeichnet, dass** der sich erweiternde Wandabschnitt (14) des Entkopplungsbereiches (10) konisch ausgebildet ist.

5. Kupplungselement nach einem der vorhergehenden Ansprüche, **dadurch gekennzeichnet, dass** der sich erweiternde Wandabschnitt (14) des Entkopplungsbereiches (10) eine in Richtung auf den Befestigungsbereich (8) des Aufnahmeteils (4) kleiner werdende Wandstärke hat.

6. Kupplungselement nach einem der vorhergehenden Ansprüche, **dadurch gekennzeichnet, dass** der Einsteckbereich (28) des Einsteckteils (6) eine konische Außenfläche (34) hat und der Aufnahmebereich (12) des Aufnahmeteils (4) einen Wandabschnitt (20) mit einer konischen Innenfläche hat, die im zusammengebauten Zustand des Kupplungselementes presssitzartig aneinander anliegen.

7. Kupplungselement nach einem der vorhergehenden Ansprüche, **dadurch gekennzeichnet, dass** der Einsteckbereich (28) des Einsteckteils (6) eine äußere Ringnut (36) aufweist und der Aufnahmebereich (12) des Aufnahmeteils (4) einen an die Ringnut angepassten inneren ringförmigen Vorsprung (22) aufweist, der im zusammengebauten Zustand des Kupplungselementes von der Ringnut (36) spielfrei aufgenommen wird.

8. Kupplungselement nach Anspruch 7, **dadurch gekennzeichnet, dass** der ringförmige Vorsprung (22) an mehreren über den Umfang verteilten Stellen durch je eine Ausnehmung (24) unterbrochen ist, um dem Aufnahmebereich (12) des Aufnahmeteils (4) eine ausreichende Elastizität zum Ineinanderstecken des Aufnahmeteils (4) und Einsteckteils (6) zu verleihen.

9. Kupplungselement nach einem der vorhergehenden Ansprüche, **dadurch gekennzeichnet, dass** die Befestigungsbereiche (8', 8'', 8''', 26', 26'', 26''') des Aufnahmeteils (4) und des Einsteckteils (6) unmittelbar an zwei miteinander zu verbindenden festen Bauteilen befestigbar sind, so dass das Kupplungselement ohne weitere Kupplungsteile als Kupplung zwischen den beiden Bauteilen dient.

10. Kupplungselement nach Anspruch 9, **dadurch gekennzeichnet, dass** der Befestigungsbereich (8', 8'') des Aufnahmeteils (4', 4'') und/oder der Befestigungsbereich (26'', 26''') des Einsteckteils (6'', 6''') mit einem Gewindeabschnitt (40, 42; 52, 54) zum Herstellen einer Gewindeverbindung mit dem zugehörigen Bauteil versehen ist.

11. Kupplungselement nach Anspruch 9, **dadurch gekennzeichnet, dass** der Befestigungsbereich (8''') des Aufnahmeteils (4''') und/oder der Befestigungsbereich des Einsteckteils mit einem profilierten Abschnitt (44) zum Herstellen einer gewindefreien Formschlussverbindung mit dem zugehörigen Bauteil versehen ist.

12. Kupplungselement nach Anspruch 9, **dadurch gekennzeichnet, dass** der Befestigungsbereich des Aufnahmeteils und/oder der Befestigungsbereich des Einsteckteils mit einem Rastglied zum Herstellen einer Rastverbindung mit dem zugehörigen Bauteil versehen ist.

13. Kupplungselement nach Anspruch 9, **dadurch gekennzeichnet, dass** der Befestigungsbereich des Aufnahmeteils und/oder der Befestigungsbereich (26') des Einsteckteils (6') mit einem Federglied (50) zum Herstellen einer Federclipsverbindung mit dem zugehörigen Bauteil versehen ist.

14. Kupplungselement nach einem der Ansprüche 1 bis 8, **dadurch gekennzeichnet, dass** es als bolzenförmiges Kupplungsteil einer Steckkupplung ausgebildet ist, das in ein pfannenartiges Kupplungsteil (60) der Steckkupplung einsteckbar ist.

15. Kupplungselement nach Anspruch 14, **dadurch gekennzeichnet, dass** der Befestigungsbereich (8) des Aufnahmeteils (4) eine Kugel aufweist, die in das als Kugelpfanne ausgebildete pfannenartige Kupplungsteil der Steckkupplung einsteckbar ist.

16. Kupplungselement nach einem der vorhergehenden Ansprüche, **dadurch gekennzeichnet, dass** das Aufnahmeteil (4) und das Einsteckteil (6) aus Kunststoff hergestellt sind.

17. Kupplungselement nach Anspruch 16, **dadurch gekennzeichnet, dass** das Aufnahmeteil (4) aus einem thermoplastischem Elastomer auf Polyesterbasis oder einem vernetzten Elastomer oder einem Gummi oder Kautschuk hergestellt ist.

18. Kupplungselement nach Anspruch 16 oder 17, **dadurch gekennzeichnet, dass** das Einsteckteil (6) aus einem hochfesten Kunststoff besteht.

19. Kupplungselement nach einem der Ansprüche 16 bis 18, **dadurch gekennzeichnet, dass** der Befestigungsbereich (8') des Aufnahmeteils (4') und/oder der Befestigungsbereich (26; 26''') des Einsteckteils (6; 6''') ein metallisches Gewindeteil enthält.
